# EUROPEAN PATENT APPLICATION

(11) **EP 1 598 734 A1**
(43) Date of publication of application: **23.11.2005**
(21) Application number: 05251106.0
(22) Date of filing: 24.02.2005
(51) Int. Cl.: G06F 3/023, G06F 3/00, H04M 1/725, H04Q 7/32

(54) **Cellular phone, computer-readable medium having program emboided therein, and internet connection device using the same**

(30) Priority: 20.05.2004 JP 2004150704
(71) Applicant: Mitsumi Electric Co., Ltd., Tama-shi, Tokyo 206-8567 (JP)
(72) Inventor: Kouji, Ohtsuka, c/o Mitsumi Electric Co., Ltd., Atsuji-shi, Kanagawa 243-8533 (JP)
(74) Representative: Rees, Alexander Ellison

(57) **Abstract**

A disclosed cellular phone has a key input section to input with a key, a display section to display an image and a section to connect to the Interne. The cellular phone includes a converting section to convert a character input by the key input section into a control signal for inputting the character into an Internet connection device, and a transmitting section to transmit the control signal for inputting the character converted by the converting section to the Internet connection device.

## Description

### BACKGROUND OF THE INVENTION

### 1. Field of the Invention

The present invention generally relates to a cellular phone, a computer-readable medium having a program embodied therein, and an Internet connection device using the same, and particularly relates to a cellular phone capable of remotely controlling an Internet connection device, a computer-readable medium having a program embodied therein, and an Internet connection device using the same.

### 2. Description of the Related Art

Widely-spread DSL communications such as ADSL (Asymmetric Digital Subscriber Lines), VDSL (Very-high-bit-rate DSL), HDSL (High-bit-rate DSL), SDSL (Symmetric DSL) or the like use a high frequency band that does not affect the band used in a telephone service on existing telephone lines.

An IP-STB (Internet Protocol-Set Top Box) is one of Internet connection devices using such DSL communication. The IP-STB is installed at, for example, home and hotels. A user operates a remote controller thereof or a computer keyboard to access and view desired Web sites, streaming content and the like.

Techniques for using a cellular phone as a remote controller for an electric apparatus are disclosed in, for example, Japanese Patent Laid-Open Publication No. 11-284757 (hereinafter referred to as "Publication 1"), Laid-Open Publication No. 11-341171 (Publication 2), Laid-Open Publication No. 2001-237925 (Publication 3), and Laid-Open Publication No. 2002-16677 (Publication 4). According to Publication 1, there is provided a remote control system, wherein a control section receives a signal from a cellular phone and generates an optical signal corresponding to the received signal to remotely control an electric apparatus.

According to Publication 2, there is provided a cellular phone that switches a communicating section and a remote control section with use of a function key thereof, inputs remote control information with use of a control button, and transmits a remote control signal from an infrared signal transmitter to an electric apparatus.

According to Publications 3 and 4, there is provided a cellular phone that downloads remote control specification data for an electric apparatus by connecting to a specified online server storing the data, stores the data in a memory thereof, displays key operations and operational instructions to the electric apparatus, and transmits infrared control signals corresponding to the key operation to the electric apparatus.

When a user wants to access and view a desired Web site using a known Internet connection device, the user operates a remote controller or a keyboard. The remote controller, however, only has up/down and left/right arrow keys and does not have character keys. Therefore, when the user sends mail to the accessed Web site, the user displays a character table (for Japanese alphabet, English alphabet, etc.) as a click palette for entering characters on a monitor screen of the Internet connection device and selects a character by moving a cursor to the position of a desired character and selecting the character with use of the remote controller. In this way, the user inputs characters one by one. Moreover, since remote controller buttons are generally made of rubber, the user feels uncomfortable when operating them and, sometimes, cannot clearly perceive whether the button is pushed. For these reasons, it takes time and effort to input characters.

Even if using a computer keyboard connected to the Internet connection device, it takes time and effort for a user unfamiliar with a personal computer and the arrangement of characters on the keyboard to input characters.

### SUMMARY OF THE INVENTION

A general object of the present invention is to provide a cellular phone, a computer-readable medium having a program embodied therein, and an Internet connection device using the same in view of the foregoing disadvantages. A specific object of the present invention is to provide a cellular phone that allows a user to save time and effort for inputting characters into an Internet connection device, a computer-readable medium having a program embodied therein, and an Internet connection device using the same.

According to an aspect of the present invention, there is provided a cellular phone having a key input section to input with a key, a display section to display an image, and a section to connect to the Internet, the cellular phone comprising a converting section to convert a character input by the key input section into a control signal for inputting the character into an Internet connection device, and a transmitting section to transmit the control signal for inputting the character converted by the converting section to the Internet connection device. With this configuration, since character input by the key input section of the cellular phone is input into the Internet connection device, operations for inputting characters are facilitated if compared with a related-art remote controller without a key input section.

In the above-described cellular phone, it is preferable that the control signal for inputting the characters into the Internet connection device be a series of control signals for moving a cursor to the position of a desired character and selecting the character on a character table as a click palette displayed on a monitor of the Internet connection device. With this configuration, the character input by the key input section of the cellular phone can be input into the Internet connection device.

According to another aspect of the present invention, there is provided an Internet connection device configured to receive the control signal for inputting the characters transmitted from the above-described cellular phone, to connect to the Internet in accordance with the control signal, to access a desired Web site, and to transmit the input characters to the Web site. With this configuration, users can easily input characters if compared with a related-art remote controller without a key input section, and easily send the input characters to the Web site.

According to still another aspect of the present invention, there is provided a computer-readable medium having a program embodied therein for a computer of a cellular phone including a key input section to input with a key, a display section to display an image, and a section to connect to the Internet, the program comprising a converting section provided over the Internet, causing the computer to convert a character input by the key input section into a control signal for inputting the character into an Internet connection device, and a transmitting section causing the computer to transmit the control signal including the control signal for inputting the character converted by the converting section to the Internet connection device. With this computer-readable medium, the cellular phone of the present invention is realized.

### BRIEF DESCRIPTION OF THE DRAWINGS

Fig. 1 is a block diagram showing a cellular phone according to an embodiment of the present invention;
Fig. 2 is a block diagram showing an Internet connection device according to the embodiment of the present invention;
Fig. 3 is an illustration showing the cellular pone transmitting an infrared control signal to the Internet connection device; and
Fig. 4 is a flowchart showing operations executed by a CPU of the cellular phone in a remote control mode.

### DETAILED DESCRIPTION OF THE PREFERRED EMBODIMENT

In the following, an embodiment of the present invention is described with reference to the accompanying drawings.

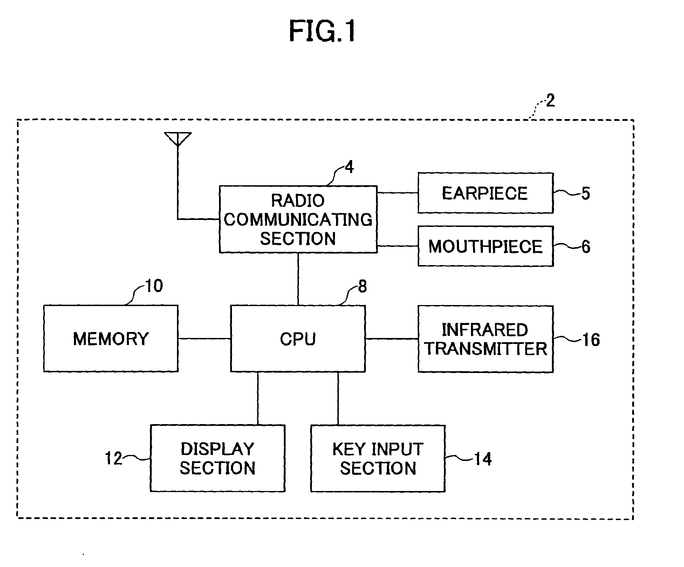

Fig. 1 is a block diagram showing a cellular phone according to the embodiment of the present invention. As shown in Fig. 1, a cellular phone 2 comprises a radio communicating section 4, an earpiece 5, a mouthpiece 6, a CPU 8, a nonvolatile memory 10, a display section 12, a key input section 14, and an infrared transmitter 16.

The radio communicating section 4 demodulates received radio signals and sends the modulated data to the CPU 8. Also, the radio communicating section 4 modulates transmit data sent from the CPU 8 to transmit the data via radio waves. Audio data contained in the modulated data are sent from the CPU 8 to the earpiece 5, and then converted into audio signals to be output as sound. Audio signals received by the mouthpiece 6 are converted into audio data, and then sent to the CPU 8 as transmit data.

The CPU 8 controls the entire operation of the cellular phone 2. The CPU 8 decodes the demodulated data sent from the radio communicating section 4 so as to receive a call. Also, the CPU 8 establishes a connection to the Internet via radio communicating section 4 using a browser stored in the memory 10. When the modulated data sent from the radio communicating section 4 comprises a character conversion program, the CPU 8 stores it in the memory 10. When the sent modulated data are image data and text data, the CPU 8 generates a display image to display the image and the text on the display section 12.

The CPU 8 recognizes input operations performed by the key input section 14 so as to originate a call. When in a remote control mode, the CPU 8 generates control data using the character conversion program in the memory 10 to send the data to the infrared transmitter 16. The infrared transmitter 16 outputs infrared control signals corresponding to the control data.

The cellular phone 2 hooks up to a cellular phone network to access a specified Web site via the Internet from a center apparatus as a gateway to the Internet. The cellular phone 2 then downloads a character conversion program from this Web site and stores the program in the memory 10.

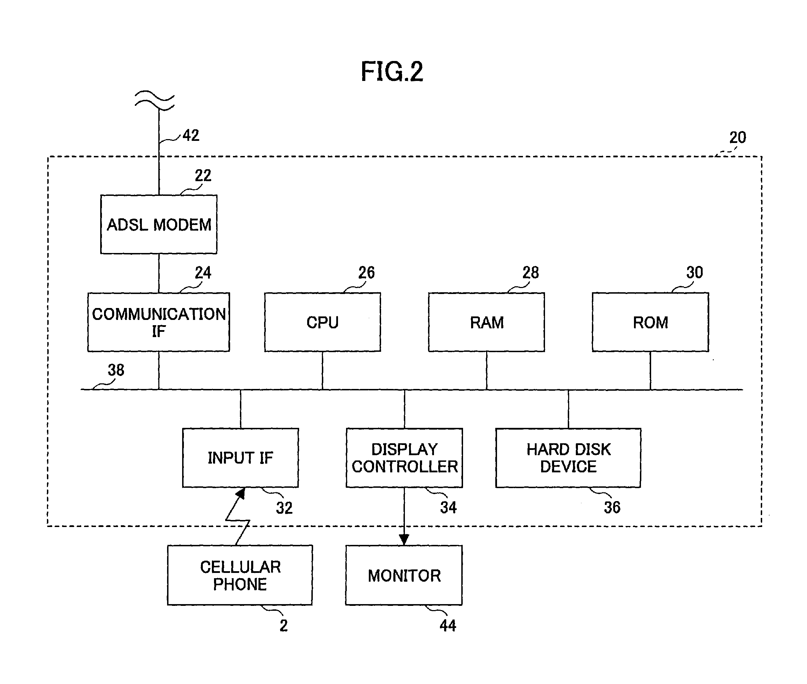

Fig. 2 is a block diagram showing an Internet connection device 20 according to the embodiment of the present invention. In this embodiment, ADSL communication is employed. As shown in Fig. 2, the Internet connection device 20 comprises an ADSL modem 22, a communication IF (interface) 24, a CPU 26, a RAM 28, a ROM 30, an input IF (interface) 32, a display controller 34, a hard disk device 36, and an internal bus 38 connecting these components. This Internet connection device 20 is an IP-STB, which is installed at home, hotels, etc. A user operates the cellular phone 2 (or a remote controller) to access and view desired Web sites, streaming content and the like.

The ADSL modem 22 is connected to an ADSL modem (not shown) in a network base station via a telephone line 42 as well as to the communication IF 24 via a LAN. The communication IF 24 is an interface between the internal bus 38 and the LAN. The CPU 26 executes a program stored in the ROM 30 to control the entire operation of the Internet connection device 20. In this process, the RAM 28 is used as a work area.

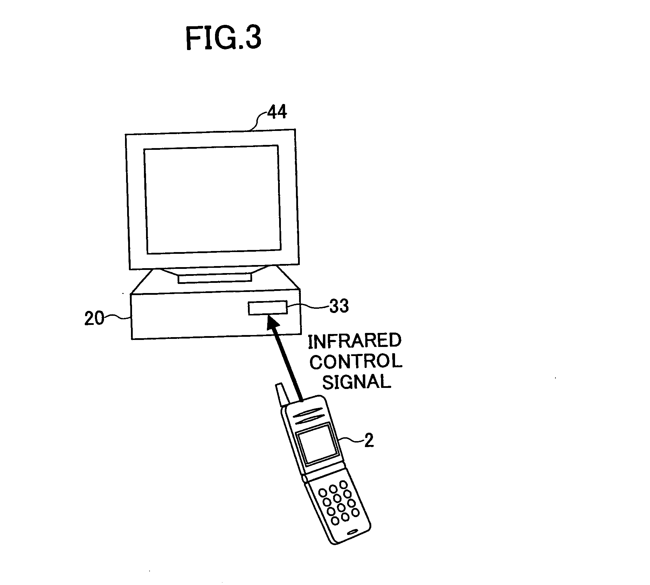

The input IF 32 has an infrared receiver 33 shown in Fig. 3. As shown in Fig. 3, the infrared receiver 33 receives the infrared control signals output from the cellular phone 2. With this configuration, operations and characters that the user inputs using the cellular phone 2 are recognized by the CPU 26 through the input IF 32.

The CPU 26 causes the ADSL modem 22 to connect to the ADSL modem in the network base station via the telephone line 42 according to the inputs, and thereby communicates with an ISP connected to the ADSL modem in the network base station. IP (Internet Protocol) data thus sent from the ISP are stored in the RAM 28 or the hard disk device 36 and then displayed on a monitor 44 by the display controller 34. The CPU 26 displays characters input by the user on the monitor 44 for writing mail or the like.

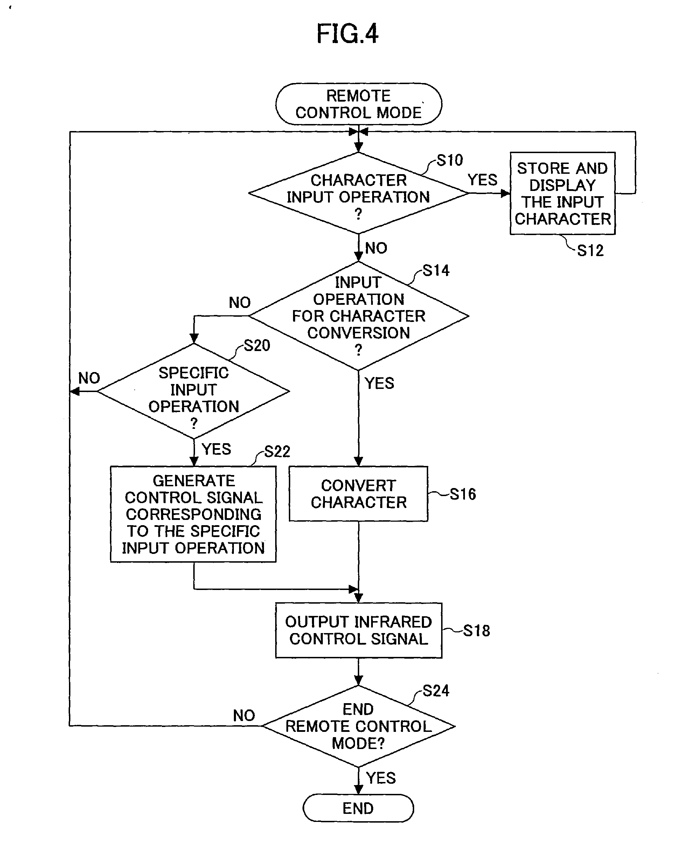

Fig. 4 is a flowchart showing operations executed by the CPU 8 of the cellular phone 2 in the remote control mode. The cellular phone 2 is set to the remote control mode when a function key of the key input section 14 is operated.

As shown in Fig. 4, the CPU 8 first determines whether a character input operation is performed in step S10. If the character input operation is performed, the CPU 8 stores an input character (including a number and a symbol) in the memory 10 and displays the stored character or a character string on the display section 12 in step S12 then returns to step S10.

Otherwise, if the character input operation is not performed or is ended, the CPU 8 determines whether an input operation for character conversion with use of a character conversion key of the key input section 14 is performed in step S14. If the input operation for character conversion is performed, character conversion is executed in step S16. In this step, a series of control signals for moving a cursor to the position of a desired character and selecting the character on a Japanese or English alphabet character table as a click palette on the monitor 44 are generated. In other words, a plurality of control signals for moving the cursor and selecting the character are generated for each character. This character conversion is executed on all the characters stored in the memory 10. A series of control signals generated due to this conversion are output as infrared control signals by the infrared transmitter 16 in step S18.

If the input operation for character conversion is not performed, the CPU 8 determines whether a specific input operation with use of a delete key, up/down and left/right arrow keys or the like is performed in step S20. If the specific input operation is performed, the operation proceeds to step S22 to generate a control signal corresponding to the specific input operation. This control signal is output as an infrared control signal by the infrared transmitter 16 in step S18. If the specific input operation is not performed in step S20, the operation returns to step S10 and repeats steps S10 through 14.

After step S18, the operation proceeds to step S24, wherein the CPU 8 determines whether the remote control mode is ended. If the remote control mode is not ended, the operation proceeds to step S10. Otherwise, if the remote control mode is ended, the CPU 8 ends the operations cycle.

In this way, the cellular phone 2 outputs a series of infrared control signals for moving the cursor to the position of desired characters and selecting the characters on the character table as a click palette displayed on the monitor 44 of the Internet connection device 20, so that the characters are input into the Internet connection device 20.

If there is an incoming call or mail during the remote control mode operation shown in Fig. 4, the operation is temporarily suspended to receive the call or mail. After receiving or answering the call or mail, the user can go back to the remote control mode operation to continue what he/she has been doing before receiving the call or mail. For example, if there is a call during the character input in step S10, the remote control mode is temporarily turned off, and the characters that have been input before the call are stored in a temporary memory. When the call is ended and a call end button is pushed, the remote control mode is turned on and, at the same time, the input characters are retrieved from the temporary memory. Thus the user can continue what he/she has been doing before receiving the call in step S10.

Since the cellular phone 2 is widely used and its operating system and operating mechanism are suitably designed for daily use of e-mail and the like, users can easily perform character input operations and other operations by using the cellular phone 2 as an everyday device without any special effort. Therefore, time and effort for inputting characters can be saved if compared with a related-art remote controller without a key input section.

If a PDA (Personal Digital Assistant) is employed as the Internet connection device instead of the IP-STB exemplified as the Internet connection device in the above-described embodiment, time and effort for inputting characters can be saved.

It should be appreciated that step S16 and step S18 respectively correspond to a converting section and a transmitting section in the following claims.

## Claims

1. A cellular phone having a key input section to input with a key, a display section to display an image, and a section to connect to the Internet, **characterized in that**
a converting section to convert a character input by the key input section into a control signal for inputting the character into an Internet connection device; and
a transmitting section to transmit the control signal for inputting the character converted by the converting section to the Internet connection device.

2. The cellular phone as claimed in claim 1, **characterized in that** the control signal for inputting the character into the Internet connection device is a series of control signals for moving a cursor to the position of a desired character and selecting the character on a character table as a click palette displayed on a monitor of the Internet connection device.

3. The cellular phone as claimed in claim 1 or 2, **characterized in that** the transmitting section transmits the control signal converted by the converting section to the Internet connection device via infrared light.

4. An Internet connection device, configured to receive the control signal for inputting the character transmitted from any one of the cellular phones of claims 1 through 3, to connect to the Internet in accordance with the control signal, to access a desired Web site, and to transmit the input character to the Web site.

5. A computer-readable medium having a program therein for a computer of a cellular phone including a key input section to input with a key, a display section to display an image, and a section to connect to the Internet,
**characterized in that**
a converting section, provided over the Internet, causing the computer to convert a character input by the key input section into a control signal for inputting the character into an Internet connection device; and
a transmitting section causing the computer to transmit the control signal for inputting the character converted by the converting section to the Internet connection device.
